(19) Europäisches Patentamt / European Patent Office / Office européen des brevets

(11) **EP 4 102 425 A1**

(12) **EUROPÄISCHE PATENTANMELDUNG**

(43) Veröffentlichungstag:
**14.12.2022   Patentblatt 2022/50**

(21) Anmeldenummer: **21178877.3**

(22) Anmeldetag: **10.06.2021**

(51) Internationale Patentklassifikation (IPC):
**G06Q 10/06** (2012.01)      **G06Q 10/08** (2012.01)
**G06Q 50/04** (2012.01)

(52) Gemeinsame Patentklassifikation (CPC):
**G06Q 10/06395; G05B 19/418; G05B 23/02;
G06Q 10/0875; G06Q 50/04; G06T 7/00;
G07C 3/14**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Schall, Daniel
2020 Hollabrunn (AT)**

(74) Vertreter: **Maier, Daniel Oliver
Siemens AG
Postfach 22 16 34
80506 München (DE)**

(54) **COMPUTERIMPLEMENTIERTE DATENSTRUKTUR, VERFAHREN, INSPEKTIONSVORRICHTUNG UND SYSTEM ZUM ÜBERMITTELN EINES MODELLS FÜR MASCHINELLES LERNEN**

(57)   Computerimplementierte Datenstruktur (DS) zum Übermitteln eines Modells für maschinelles Lernen, umfassend
• Eine Beschreibung (BOM-MD) für eine Komponente,
• Eine Bezeichnung (LS) für ein Merkmal der Komponente,

• Ein Klassifikations-Modell (CM) für das Merkmal der Komponente,
• zumindest einen Sensor-Parameter (SETUP), welcher die Erfassung der Komponente mithilfe zumindest eines Sensormittels beschreibt.

## FIG 1

EP 4 102 425 A1

**EP 4 102 425 A1**

**Beschreibung**

Die Erfindung betrifft eine computerimplementierte Datenstruktur, ein computerimplementiertes Verfahren, eine Inspektionsvorrichtung und ein System zum Übermitteln eines Modells für maschinelles Lernen.

Ferner betrifft die Erfindung ein Computerprogramm, einen elektronisch lesbaren Datenträger und ein Datenträgersignal.

Moderne Produkte enthalten häufig kritische Komponenten oder anspruchsvolle Materialien, für deren Herstellung spezielle technologische Fähigkeiten erforderlich sind.

Es ist oft sehr schwierig und auch nicht immer sinnvoll für ein einzelnes Unternehmen, über alle erforderlichen Produktions-Fähigkeiten zu verfügen und alle Produktionsschritte selbst durchzuführen.

Ein Fertigungsnetzwerk ist eine permanente oder temporäre Koalition von Fertigungs-Kunden beziehungsweise Teilnehmern, die Produktionssysteme beispielsweise von geografisch verteilten kleinen und mittleren Unternehmen und/oder Erstausrüstern (OEM) umfasst, die in einer gemeinsamen Wertschöpfungskette zusammenarbeiten, um eine gemeinsame Fertigung durchzuführen.

Ein Beispiel für ein Fertigungsszenario besteht darin, dass die Produktion bestimmter Teile an weitere Lieferanten delegiert wird. Qualität ist dabei einer der wichtigsten Faktoren zwischen Lieferanten und Kunden.

Verbesserungen des Qualitätsmanagements bei der Reduzierung von Prozessschwankungen können sich direkt auf mehrere Leistungskennzahlen in der Lieferkette auswirken.

Durch die kontinuierliche Verbesserung des Qualitätsmanagements können Fehler - und damit Prozess- und Produktionsschwankungen - reduziert werden.

Wenn sich wiederum die Konsistenz in der Lieferkette aufgrund der Verringerung der Abweichungen verbessert, können Zykluszeiten, also die Zeit zwischen zwei aufeinanderfolgenden Nachschubvorgängen, verkürzt und eine pünktliche Lieferung verbessert werden.

Wenn weniger Fehler entstehen, kann der Lagerbestand in der Lieferkette reduziert werden, was in vielerlei Hinsicht sehr vorteilhaft ist. Teilnehmer der Lieferkette, also Produktionskunden, bewegen nur "gute" Einheiten und keine "defekten" Einheiten durch die Lieferkette.

Heutzutage werden häufig zur visuellen Erkennung von Fehlern Sensoren wie optische Kameras eingesetzt, welche eine sehr gute Fehlererkennung erlauben, nachdem das zugrunde liegende Modell dementsprechend trainiert wurde.

Es ist dabei allerdings nachteilig, dass das Modell aufwändig anhand von Beispielen, wie Bilder von fehlerhaften Produkten, trainiert werden muss, was zeitaufwändig und teuer ist.

Es ist Aufgabe der Erfindung die Erkennung fehlerhafter Produkte und Werkstücke mithilfe maschinellen Lernens zu verbessern, und die Erkennung zuverlässig, so rasch wie möglich und auf eine einfache Weise durchzuführen.

Die erfindungsgemäße Aufgabe wird durch eine computerimplementierte Datenstruktur gelöst, umfassend

- Eine Beschreibung für eine Komponente,

- Eine Bezeichnung für ein Merkmal der Komponente,

- Ein Klassifikations-Modell für das Merkmal der Komponente,

- zumindest einen Sensor-Parameter, welcher die Erfassung der Komponente mithilfe zumindest eines Sensormittels beschreibt.

Mithilfe der Datenstruktur können nun Modelle und Merkmale von einem ersten Inspektionssystem zu einem miteinander verbundenen, zweiten Inspektionssystem übertragen werden.

Von der Datenstruktur kann ein jeweiliger Datensatz abgeleitet werden, welcher jeweilige Datenelemente für eine Beschreibung für eine Komponente, eine Bezeichnung für ein Merkmal der Komponente, ein Klassifikations-Modell für das Merkmal der Komponente und zumindest einen Sensor-Parameter aufweist.

Dabei kann in einem zweiten Inspektionssystem der Aufwand zum Trainieren des Modells erheblich reduziert werden, da die Modelle gemeinsam genutzt werden können und der Aufwand zum Trainieren des zweiten oder eines weiteren Inspektionssystems reduziert werden kann.

Insbesondere bei einer Produktion mit einer Losgröße von eins kann dieses Problem noch schwieriger sein, da Daten wie Bilder von fehlerhaften Produkten selten sind.

In Bezug auf das Verbundlernen können Kundenbeiträge überprüft werden, bevor sie in der Aggregation verwendet werden.

Die Kundenbeiträge können vorteilhaft nach Beziehungs-Metriken wie "Vertrauen" und "Qualität" gewichtet werden.

Durch die erfindungsgemäße Datenstruktur wird erreicht, dass Modelle für maschinelles Lernen zwischen Rechenvorrichtungen beispielsweise für gemeinsames Lernen ausgetauscht werden können. Mit anderen Worten kann eine standardisierte Schnittstelle zum Austausch von Modellen geschaffen.

Die Datenstruktur kann durch verschiedene Datenelemente und Datenformate implementiert werden, weist jedoch immer eine Beschreibung für eine Komponente, eine Bezeichnung für ein Merkmal der Komponente, ein Klassifikations-Modell für das Merkmal der Komponente sowie zumindest einen Sensor-Parameter auf.

Neben einem Klassifikations-Modell erlaubt insbesondere die Einbeziehung eines Sensor-Parameters in die Datenstruktur eine Verbesserung bei einer nachfolgenden Ähnlichkeitsanalyse, da eine Adjustierung des Klassifikations-Modells auf Trainingsdaten eines zweiten Inspektionssystems ermöglicht wird.

Dadurch kann das zweite Modell verbessert werden und die Erkennungsgenauigkeit für ein Merkmal einer Komponente gesteigert werden.

Die erfindungsgemäße Aufgabe wird auch durch eine Verwendung der erfindungsgemäßen Datenstruktur bei einer optischen Qualitäts-Inspektion gelöst, wobei der Sensor-Parameter einen Kamera-Parameter umfasst.

Unter einer optischen Qualitäts-Inspektion wird eine visuelle Inspektion durch einen optischen bildgebenden Sensor verstanden, bei welcher eine vorgegebene Ausführungsqualität für einen oder mehrere Produktionsschritte durch ein Referenzbild mit einem aktuell erfassten Bild verglichen wird und mittels einer Ähnlichkeitsanalyse der Grad der Übereinstimmung beider Bilder durch eine Rechenvorrichtung bestimmt wird.

In Bezug auf die visuelle Qualitätsprüfung unterstützt die erfindungsgemäße Lösung die gemeinsame Nutzung von Modellparametern zwischen verschiedenen Standorten und möglicherweise Unternehmen auf datenschutzrechtliche Weise. Es können Modelle im Laufe der Zeit verbessert werden, ohne dabei die Daten gemeinsam zu nutzen.

Die erfindungsgemäße Datenstruktur ist insbesondere für die Verwendung bei einer optischen Qualitäts-Inspektion vorteilhaft, beispielsweise bei einem bildgebenden Verfahren, da ein empfangenes Modell durch Anwendung eines Sensor-Parameters, wie ein Kamera-Parameter, noch besser für einen Bildvergleich oder Modellvergleich von einer Ähnlichkeitstransformation berücksichtigt werden kann, nämlich durch Berücksichtigung von Kamera-Einstellungen wie Orientierung, Abstand, Brennweise, Belichtungszeit, etc.

Die erfindungsgemäße Aufgabe wird auch durch eine Inspektionsvorrichtung zur Verwendung beim Übermitteln eines Modells für maschinelles Lernen, umfassend einen Erfassungs-Sensor, eine Rechenvorrichtung mit einem Speicher, wobei die Rechenvorrichtung dazu eingerichtet ist, ein Modell für maschinelles Lernen mithilfe eines Datensatzes, welche auf der erfindungsgemäßen Datenstruktur basiert, zu erzeugen, anzuwenden oder zu trainieren.

Dadurch wird erreicht, dass ein Modell für maschinelles Lernen, welches von einer Rechenvorrichtung mit einem Speicher angewendet wird, mithilfe eines empfangenen Datensatzes erzeugt und/oder trainiert werden kann, wodurch die Anwendung des empfangenen Modells vereinfacht wird, die Trainingszeit verkürzt und die Modellgenauigkeit verbessert werden kann.

Die erfindungsgemäße Aufgabe wird auch durch ein System zum Übermitteln eines Modells für maschinelles Lernen gelöst, umfassend eine erste und zumindest eine zweite erfindungsgemäße, miteinander verbundene Inspektionsvorrichtung, wobei die erste Inspektionsvorrichtung dazu eingerichtet ist, einen Datensatz, welcher auf der erfindungsgemäßen Datenstruktur basiert, aus dem Modell der ersten Inspektionsvorrichtung abzuleiten, und den Datensatz an die zumindest eine zweite Inspektionsvorrichtung zu übermitteln, welche zumindest eine zweite Inspektionsvorrichtung dazu eingerichtet ist, deren Modell mit dem, von der erste Inspektionsvorrichtung empfangenen Datensatz zu erzeugen, anzuwenden oder zu trainieren.

Dadurch wird erreicht, dass ein Modell für maschinelles Lernen durch mehrere Teilnehmer in einem System sehr einfach angewendet werden kann, wodurch die Trainingszeit verkürzt und die Modellgenauigkeit verbessert werden kann.

In einer Weiterbildung des Systems ist es vorgesehen, dass die erste und zumindest eine zweite Inspektionsvorrichtung über einen Server miteinander verbunden sind, welcher eine Rechenvorrichtung mit einem Speicher aufweist und die Rechenvorrichtung dazu eingerichtet ist, den Datensatz von der ersten Inspektionsvorrichtung zu empfangen und daraus ein Gesamt-Modell zu erzeugen, anzuwenden oder zu trainieren.

Dadurch wird erreicht, dass neben einer PtP-Verbindung (engl. "peer-to-peer") beispielsweise über and "Edges" gelegenen oder mit einer jeweiligen "Edge" verbundenen Inspektionsvorrichtungen, eine Client-Server-Übertragung erfolgen kann, wobei am Server ein "globales" Modell oder die jeweiligen TeilModelle einzelner Kunden beziehungsweise Teilnehmer gespeichert wird.

Unter einer "Edge" wird eine Rechenvorrichtung verstanden, welche mit einer weiteren "Edge" oder einem Server kommunizieren kann und mit einer lokalen Rechenvorrichtung, wie einer Inspektionsvorrichtung, welche ein Modell zum maschinellen Lernen mit Sensoren anwendet, verbunden ist.

Die erfindungsgemäße Aufgabe wird auch durch ein computerimplementiertes Verfahren gelöst, wobei eine erste Inspektionsvorrichtung ein erstes Modell für maschinelles Lernen aufweist, aus welchem ersten Modell ein Datensatz, basierend auf der erfindungsgemäßen Datenstruktur abgeleitet wird, der Datensatz an zumindest eine zweite Inspektionsvorrichtung mit einem zweiten Modell für maschinelles Lernen übermittelt wird, und das zweite Modell mithilfe des Datensatzes trainiert wird.

In einer Weiterbildung des Verfahrens ist es vorgesehen, dass für das erste Modell zumindest eine Gewichtsfunktion beim Training des zweiten Modells angewendet wird.

Dadurch wird erreicht, dass Produktionsdaten verschiedener Kunden oder Teilnehmer individuell berücksichtigt werden können und ein genaueres Gesamt-Modell ermittelt werden kann.

Die erfindungsgemäße Aufgabe wird auch durch ein Computerprogramm gelöst, umfassend Befehle, welche bei deren Ausführung durch einen Computer diesen veranlassen, das erfindungsgemäßen Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1    ein Ausführungsbeispiel für die erfindungsgemäße Datenstruktur,

Fig. 2    ein Ausführungsbeispiel für ein Produktions-Szenario,

Fig. 3    ein Ausführungsbeispiel für einen Pseudo-Code zur Mittelung unter Verwendung von Vertrauens- und Qualitäts-Wichtungen für mehrere Hersteller.

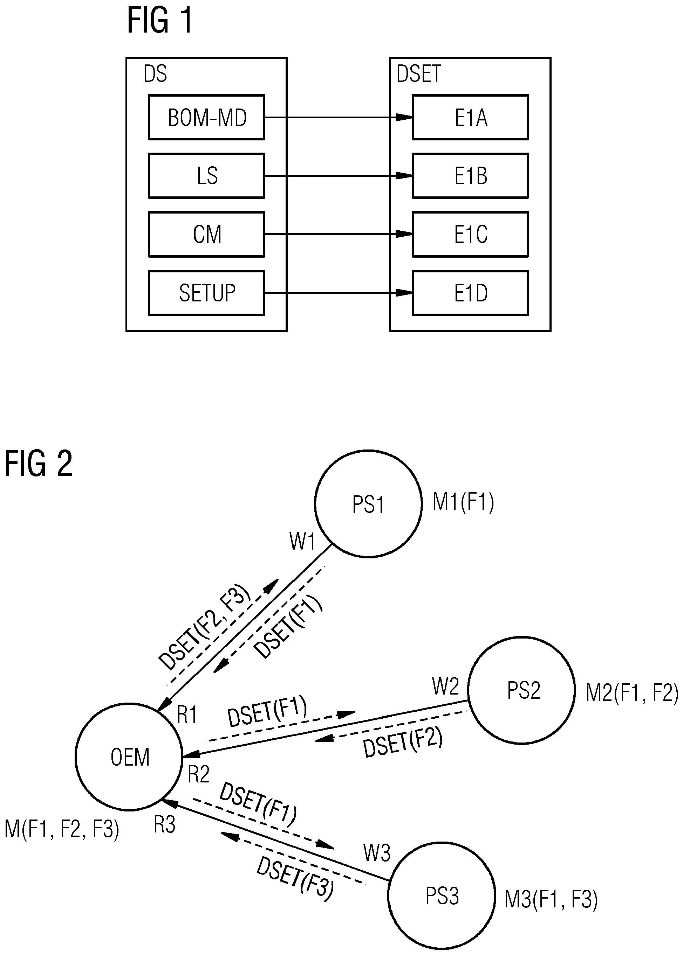

**Fig. 1** stellt ein Ausführungsbeispiel für die erfindungsgemäße Datenstruktur DS dar, welche als Vorlage für einen Datensatz DSET mit Daten-Elementen E1A-E1D dient. Die Vorlage kann von jedem Produktions-Teilnehmer verwendet werden, um beispielsweise entsprechende Datensätze an einen Gesamt-Hersteller zu übermitteln.

In diesem Beispiel wird die Datenstruktur bei einer optischen Qualitäts-Inspektion (engl. "Visual Quality Inspection", VQI) verwendet. Ein Sensor-Parameter SETUP umfasst Kamera-Parameter, beispielsweise die Ausrichtung, die Brennweise oder die Auflösung des Kamera-Sensors.

Die computerimplementierte Datenstruktur DS zum Übermitteln eines Modells für maschinelles Lernen umfasst:

- Eine Beschreibung BOM-MD (engl. "Bill-of-Material"-Metadaten) für eine Komponente: beispielsweise in Form von Stücklisten-Metadaten, welche sich zu einem bestimmten Zeitpunkt auf ein Produkt oder Teile eines Produkts konzentriert. Diese Stücklisten-Metadaten machen deutlich, für welches Produkt das Modell verwendet werden kann.
  Der zugeordnete Datensatz DSET bezeichnet eine Komponente "Getriebe" als Beschreibung E1A.
  Die Komponente E1A "Getriebe" weist mehrere Teile auf.
  Es ist dabei jedoch unwesentlich, wie die Komponenten hergestellt oder zusammengebaut wurde. Die Komponente kann daher automatisch oder manuell zusammengesetzt worden sein.
- Eine Bezeichnung LS (engl. "label set") für ein Merkmal E1B "lockere Schraube" der Komponente E1A "Getriebe".
  Die Bezeichnung LS beinhaltet eine "Problembeschreibung", welche durch Anwendung eines VQI-Modells erkannt werden soll und beschreibt in diesem Beispiel das Merkmal "lockere Schraube".
  Die Bezeichnung LS ist mit einem Bild der Komponente E1A verknüpft und kann überdies eine Markierung innerhalb des Bildes aufweisen, um den relevanten Bild-Bereich zu kennzeichnen. Für jede Bezeichnung ist ein aktuelles Bild mit dem entsprechenden Fehler verfügbar, um dem Empfänger des Datensatzes DSET die Möglichkeit zu bieten, die Richtigkeit der durch das Modell prognostizierten Bezeichnung zu verifizieren.
- Ein Klassifikations-Modell CM als Element E1C im Datensatz DSET für das Merkmal E1B "lockere Schraube" der Komponente E1A "Getriebe". Es kann jede Art von Modell für ein maschinelles oder ein deep-learning-basiertes Lernen verwendet werden, wie beispielsweise ein "Convolutional Neural Network" (CNN).
  Das Modell E1C kann beispielsweise als Referenz auf Artefakte in einem Modell-Repository oder als binäres Artefakt eingebettet werden, das von der VQI-Laufzeit geladen werden kann.
- zumindest einen Sensor-Parameter SETUP als Element E1D im Datensatz DSET, welcher die Erfassung der Komponente E1A "Getriebe" mithilfe zumindest eines Sensormittels in Form einer Kamera beschreibt.
  Der Empfänger einer VQI-Vorlage muss sicherstellen, dass sein Kamerasystem ähnliche Bilder des Produkts generiert wie der Vorlagenersteller.
  Andernfalls führt das Klassifizierungsmodell nicht zu guten Ergebnissen. In der Praxis ist es nicht immer möglich und erforderlich, genau dieselben Bilder zu erzeugen, jedoch der Blickwinkel der Kamera sollte für die verschiedenen VQI-Installationen konsistent sein.
  Wenn die Kamera in Bezug auf das Produkt platziert wird, kann dies die Art und Weise beeinflussen, in der das VQI-Modell Produktfehler erkennen kann.

Zu diesem Zweck wird ein Referenzbild angegeben, das von einem Algorithmus automatisch mit dem Bild aus der neuen VQI-Kamerainstallation verglichen wird, um die Kameraposition zu überprüfen.

Der Benutzer erhält Hinweise, wie die Kameraposition entsprechend angepasst werden kann, damit ähnliche Bilder erzeugt werden, welche für einen präzisen Ähnlichkeitsvergleich vorteilhaft sind.

**Fig. 2** zeigt ein Ausführungsbeispiel für ein Produktions-Szenario mit mehreren Kunden beziehungsweise Teilnehmern PS1-PS3 (engl. "production supplier").

Im Fertigungsnetzwerk soll nun erzeugtes Wissen zur Verbesserung der Qualitätsprüfung kombiniert werden.

Die VQI-Modelle werden in der Fabrik eines jeweiligen Teilnehmers unabhängig voneinander verwendet, bevorzugt in entsprechenden Rechenvorrichtungen für maschinelles Lernen mit Speichern an der Edge.

Ein Modell kann verfeinert werden, sobald neue Daten, wie Bilder und Beschriftungen, verfügbar werden.

Es kann auch Korrekturen in Bezeichnungen, also den "Etiketten" geben, also falsche Klassifizierungen, die vom Bediener aktualisiert werden können.

Die Modelle werden basierend auf ihren lokalen Daten unabhängig voneinander neu trainiert.

Eine Verbund- (engl. "federation") und Modell-Verbesserung erlaubt den Austausch von Modell-Gewichten zwischen verschiedenen Produktions-Standorten, jedoch ohne dabei die aktuellen Produktionsdaten selbst auszutauschen.

Die Produktions-Teilnehmer PS1-PS3 als Teilnehmer-Verbund (engl. "federated clients") können jeweils deren Modelle M1-M3 inklusive Sensor-Parameter SETUP für jeweilige Merkmale F1-F3 für eine Beschreibung BOM-MD und eine Bezeichnung LS einem Gesamt-Hersteller OEM (engl. "Original Equipment Manufacturer") als Verbund-Server (engl. "federated server") mithilfe deren jeweiliger VQI-Modell-Gewichte W1-W3 zur Daten-Aggregation mittels entsprechenden Datensätzen DSET mitteilen, welcher die Modelle M1-M3 in ein Gesamt-Modell M aufnimmt.

Dabei können die Modelle M1-M3 sowie das Gesamt-Modell M fortlaufend aktualisiert und verbessert werden. Dazu kann eine entsprechende Kennzeichnung hilfreich sein, beispielsweise durch eine Versionsnummer oder einen Zeitstempel für das Modell.

Es ist möglich, dass entweder Teilmodelle M1-M3 oder das Gesamt-Modell M zur weiteren Verwendung den Teilnehmern PS1-PS3 angeboten werden, die dann dementsprechend die jeweilige Datensätze DSET laden und anwenden.

Die Gewichte bei der Berücksichtigung einzelnen Modelle M1-M3 in einem Gesamt-Modell M können dabei geprüft werden durch:

$$\Delta W1 = W1 - \bar{W}$$

$$\Delta W2 = W2 - \bar{W}$$

$$\Delta W3 = W3 - \bar{W}$$

wobei $\bar{W}$ die durchschnittliche Gewichts-Matrix und N die Anzahl an Teilnehmern *PS*1-*PS*3 ("clients") ist.

$$\bar{W} = (W1 + W2 + W3)/N$$

Beiträge an Gewichten der Teilnehmer werden zurückgewiesen, falls ein Gewichts-Unterschied $\Delta W$ einen vordefinierten Schwellwert überschreitet.

Der Gewichts-Unterschied $\Delta W$ kann im Vergleich zu anderen Teilnehmern sehr stark variieren, da unterschiedliche Fehlerklassen oder unterschiedliche Umgebungsbedingungen in der Fabrik der Teilnehmer sein können.

Die Gewichtung der Teilnehmer kann auf "Vertrauen" (engl. "trust") aufbauen.

Tabelle 1: Gewichtung nach Vertrauen

| Teilnehmer | Anzahl an Produkten | Gewicht wt |
|------------|---------------------|------------|
| A | 100 | 100/160 = 0,625 |
| B | 50 | 50/160 = 0,313 |

(fortgesetzt)

| Teilnehmer | Anzahl an Produkten | Gewicht wt |
|---|---|---|
| C | 10 | 10/160 = 0,063 |
| **Summe** | **160** | |

Tabelle 1 zeigt ein Beispiel für "Vertrauens"-Gewichte verschiedener Produktions-Teilnehmer.

Jeder Teilnehmer weist eine jeweilige Beziehung *R*1 *- R*3 zum Server *OEM* auf. Über die Stärke der Beziehungen *R*1 *- R*3 werden die "Vertrauens"-Gewichte **wt(1) -wt(3)** den jeweiligen Teilnehmern *PS*1 *- PS*3 zugeordnet.

Die Gewichtung kann auch auf "Qualität" aufbauen.

Tabelle 2: Gewichtung nach Qualität

| Teilnehmer | Anzahl an Produkten | Defekte | Gewicht wq |
|---|---|---|---|
| A | 100 | 5 | 100/5 = 20 $\rightarrow$ 20/40 = 0,5 |
| B | 50 | 5 | 50/5 = 10 $\rightarrow$ 10/40 = 0,25 |
| C | 10 | 1 | 10/1 = 10 $\rightarrow$ 10/40 = 0,25 |
| **Summe** | **160** | | |

Tabelle 2 zeigt ein Beispiel für "Qualitäts"-Gewichte verschiedener Produktions-Teilnehmer.

Jeder Teilnehmer kann defekte Produkte produzieren. Je mehr defekte Werkstücke oder Produkte durch einen Teilnehmer produziert werden, umso niedriger wird die erwartete Produktionsreife des jeweiligen Teilnehmers sein und umso geringer werden die Beiträge im Mittelungs-Verfahren gewichtet werden.

Es können daher mit dem jeweiligen Teilnehmer unterschiedliche "Qualitäts"-Gewichte **wq(1) - wq(3)** verbunden sein.

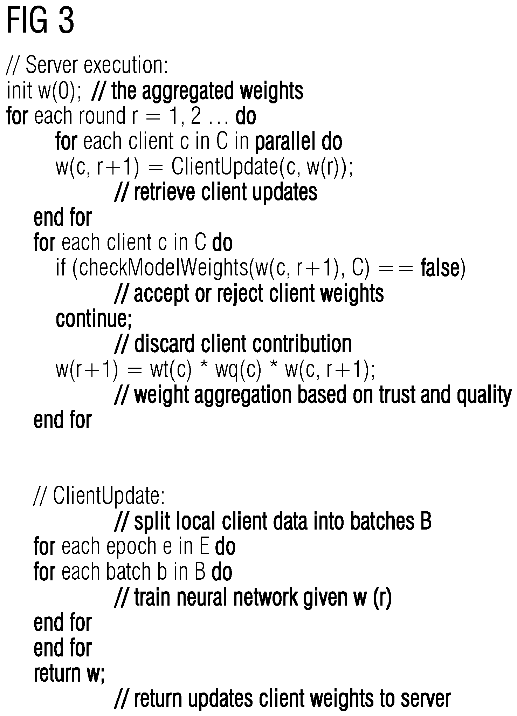

**Fig. 3** zeigt ein Ausführungsbeispiel für einen Pseudo-Code zur Mittelung unter Verwendung von Vertrauens- und Qualitäts-Wichtungen für mehrere Hersteller.

Die Gewichtung erfolgt auf Basis eines "federated averaging" Verfahrens, bei welchem Vertrauen und Qualität für jeden Teilnehmer über die jeweiligen Gewichte **wt(1) -wt(3)** und **wq(1) - wq(3)** berücksichtigt werden.

**Bezugszeichenliste:**

| | |
|---|---|
| BOM-MD | Bill-of-Material Metadaten |
| CM | Klassifikations-Modell |
| DS | Datenstruktur |
| DSET | Datensatz |
| E1A-E1D | Datenelement des Datensatzes |
| F1-F3 | Merkmal |
| LS | Label-Set |
| M, M1-M3 | Modell |
| SETUP | Sensor-Konfigurations-Parameter |
| wq1-wq3 | "Qualitäts"-Gewicht |
| wt1-wt3 | "Vertrauens"-Gewicht |

**Patentansprüche**

1. Computerimplementierte Datenstruktur (DS) zum Übermitteln eines Modells für maschinelles Lernen, umfassend

   • Eine Beschreibung (BOM-MD) für eine Komponente,
   • Eine Bezeichnung (LS) für ein Merkmal (F1-F3) der Komponente,
   • Ein Klassifikations-Modell (CM) für das Merkmal (F1-F3) der Komponente,
   • zumindest einen Sensor-Parameter (SETUP), welcher die Erfassung der Komponente mithilfe zumindest eines Sensormittels beschreibt.

**2.** Verwendung der Datenstruktur (DS) nach dem vorhergehenden Anspruch zum Übermitteln eines Modells für maschinelles Lernen nach dem vorhergehenden Anspruch bei einer optischen Qualitäts-Inspektion, wobei der Sensor-Parameter (SETUP) einen Kamera-Parameter umfasst.

**3.** Inspektionsvorrichtung (PS1-PS3) zur Verwendung beim Übermitteln eines Modells für maschinelles Lernen, umfassend einen Erfassungs-Sensor, eine Rechenvorrichtung mit einem Speicher, wobei die Rechenvorrichtung dazu eingerichtet ist, ein Modell (M1-M3) für maschinelles Lernen mithilfe eines Datensatzes (DSET), welche auf der Datenstruktur (DS) nach Anspruch 1 basiert, zu erzeugen, anzuwenden oder zu trainieren.

**4.** System zum Übermitteln eines Modells für maschinelles Lernen, umfassend eine erste und zumindest eine zweite miteinander verbundene Inspektionsvorrichtung (PS1-PS3) jeweils nach Anspruch 3, wobei die erste Inspektionsvorrichtung (PS1) dazu eingerichtet ist, einen Datensatz (DSET), welcher auf der Datenstruktur (DS) nach Anspruch 1 basiert, aus dem Modell (M1) der ersten Inspektionsvorrichtung (PS1) abzuleiten, und den Datensatz (DSET) an die zumindest eine zweite Inspektionsvorrichtung (PS2, PS3) zu übermitteln, welche zumindest eine zweite Inspektionsvorrichtung (PS2, PS3) dazu eingerichtet ist, deren Modell (M2, M3) mit dem, von der erste Inspektionsvorrichtung (PS1) empfangenen Datensatz (DSET) zu erzeugen, anzuwenden oder zu trainieren.

**5.** System nach dem vorhergehenden Anspruch, wobei die erste und zumindest eine zweite Inspektionsvorrichtung (PS1-PS3) über einen Server (OEM) miteinander verbunden sind, welcher eine Rechenvorrichtung mit einem Speicher aufweist und die Rechenvorrichtung dazu eingerichtet ist, den Datensatz (DSET) von der ersten Inspektionsvorrichtung (PS1) zu empfangen und daraus ein Gesamt-Modell (M) zu erzeugen, anzuwenden oder zu trainieren.

**6.** Computerimplementiertes Verfahren zum Übermitteln eines Modells für maschinelles Lernen, wobei eine erste Inspektionsvorrichtung nach Anspruch 3 ein erstes Modell für maschinelles Lernen aufweist, aus welchem ersten Modell ein Datensatz (DSET), basierend auf der Datenstruktur (DS) nach Anspruch 1, abgeleitet wird, der Datensatz (DSET) an zumindest eine zweite Inspektionsvorrichtung nach Anspruch 3 mit einem zweiten Modell für maschinelles Lernen übermittelt wird, und das zweite Modell mithilfe des Datensatzes (DSET) trainiert wird.

**7.** Verfahren nach dem vorhergehenden Anspruch, wobei das für das erste Modell zumindest eine Gewichtsfunktion (wt1-wt3, wq1-wq3) beim Training des zweiten Modells angewendet wird.

**8.** Computerprogramm, umfassend Befehle, welche bei deren Ausführung durch einen Computer diesen veranlassen, das Verfahren nach Anspruch 5 auszuführen.

**9.** Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach Anspruch 5 durchführen.

**10.** Datenträgersignal, welches das Computerprogramm nach Anspruch 7 überträgt.

## FIG 1

## FIG 2

# FIG 3

```
// Server execution:
init w(0);  // the aggregated weights
for each round r = 1, 2 … do
        for each client c in C in parallel do
        w(c, r+1) = ClientUpdate(c, w(r));
                // retrieve client updates
        end for
        for each client c in C do
           if (checkModelWeights(w(c, r+1), C) == false)
                // accept or reject client weights
           continue;
                // discard client contribution
           w(r+1) = wt(c) * wq(c) * w(c, r+1);
                // weight aggregation based on trust and quality
        end for


// ClientUpdate:
                // split local client data into batches B
for each epoch e in E do
for each batch b in B do
                // train neural network given w (r)
end for
end for
return w;
                // return updates client weights to server
```

Europäisches
Patentamt

European
Patent Office

Office européen
des brevets

**EUROPÄISCHER RECHERCHENBERICHT**

Nummer der Anmeldung

EP 21 17 8877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 742 388 A1 (SAMSUNG ELECTRONICS CO LTD [KR]) 25. November 2020 (2020-11-25) * Zusammenfassung * * Absätze [0011] - [0028] * * Absätze [0039] - [0061] * * Absätze [0078] - [0096]; Abbildungen 3-5 * ----- | 1-10 | INV. G06Q10/06 G06Q10/08 G06Q50/04 |
| X | US 2020/410270 A1 (NARUSE YOSUKE [JP] ET AL) 31. Dezember 2020 (2020-12-31) * Zusammenfassung * * Absätze [0008] - [0026] * * Absätze [0049] - [0077]; Abbildungen 2-4 * ----- | 1-10 | |
| A | CN 110 458 791 A (SHENZHEN PISOFTWARE TECH CO LTD) 15. November 2019 (2019-11-15) * Zusammenfassung * * Absätze [0009] - [0036] * ----- | 1-10 | |
| A | CN 111 582 395 A (JINLING INST TECHNOLOGY) 25. August 2020 (2020-08-25) * Zusammenfassung * * Absätze [0010] - [0036] * ----- | 1-10 | RECHERCHIERTE SACHGEBIETE (IPC) |
| A | CN 110 866 901 A (COMPUTER NETWORK INF CT CAS) 6. März 2020 (2020-03-06) * Zusammenfassung * * Absätze [0009] - [0031] * * Absätze [0045] - [0058]; Abbildung 2 * ----- | 1-10 | G06Q |

Der vorliegende Recherchenbericht wurde für alle Patentansprüche erstellt

| Recherchenort | Abschlußdatum der Recherche | Prüfer |
|---|---|---|
| München | 26. Oktober 2021 | Dedek, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 8877

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2021

| Im Recherchenbericht angeführtes Patentdokument | Datum der Veröffentlichung | Mitglied(er) der Patentfamilie | Datum der Veröffentlichung |
|---|---|---|---|
| EP 3742388 A1 | 25-11-2020 | CN 111771226 A<br>EP 3742388 A1<br>KR 20190099914 A<br>US 2020388011 A1<br>WO 2019164232 A1 | 13-10-2020<br>25-11-2020<br>28-08-2019<br>10-12-2020<br>29-08-2019 |
| US 2020410270 A1 | 31-12-2020 | CN 111712769 A<br>EP 3762795 A1<br>JP 2021515885 A<br>US 2020410270 A1<br>WO 2019171124 A1 | 25-09-2020<br>13-01-2021<br>24-06-2021<br>31-12-2020<br>12-09-2019 |
| CN 110458791 A | 15-11-2019 | KEINE | |
| CN 111582395 A | 25-08-2020 | KEINE | |
| CN 110866901 A | 06-03-2020 | KEINE | |

EPO FORM P0461

Für nähere Einzelheiten zu diesem Anhang : siehe Amtsblatt des Europäischen Patentamts, Nr.12/82